(19) **Europäisches Patentamt / European Patent Office / Office européen des brevets**

(11) **EP 2 412 608 B1**

(12) **EUROPEAN PATENT SPECIFICATION**

(45) Date of publication and mention of the grant of the patent:
**02.11.2016 Bulletin 2016/44**

(51) Int Cl.:
**B62D 5/04** (2006.01)

(21) Application number: **11174735.8**

(22) Date of filing: **20.07.2011**

(54) **Steering force control system**

Lenkkraftsteuerungssystem

Système de commande de force de direction

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2010 JP 2010171831**

(43) Date of publication of application:
**01.02.2012 Bulletin 2012/05**

(73) Proprietor: **Mitsubishi Jidosha Kogyo Kabushiki Kaisha**
**Tokyo 108-8410 (JP)**

(72) Inventors:
• **Yokozawa, Takashi**
**Tokyo, 108-8410 (JP)**

• **Matsumi, Toshiyuki**
**Tokyo, 108-8410 (JP)**
• **Motoyama, Sumio**
**Tokyo, 108-8410 (JP)**

(74) Representative: **Vossius & Partner**
**Patentanwälte Rechtsanwälte mbB**
**Siebertstrasse 3**
**81675 München (DE)**

(56) References cited:
**WO-A1-2008/047152      US-A- 4 905 783**
**US-A1- 2007 294 009      US-A1- 2010 087 989**

**Description**

The present invention relates to a steering force control system for improving the driving performance and body stability of a vehicle under driving conditions under which the posture of the vehicle becomes unstable, for example, adverse driving conditions, especially on road surfaces that are slippery on one side of the vehicle only with a right front wheel and a left front wheel having different friction coefficients.

In recent years, electrical power-assisted steering or electric power steering is adopted in which a steering force can be controlled by applying a steering assisting force by means of an electric motor. In the electric power steering, compared with hydraulic power steering, friction is large due to resistance of the electric motor, and a steering wheel has difficulty in returning to its neutral position. Thus, to cope with this problem, there is proposed a technique to control an electric power steering system so that a steering assisting force is applied in a direction in which a steering wheel is returned to its neutral position by making use of a difference in wheel speed between left and right steered wheels when the steering wheel is turned. In addition, particularly to improve the rough-terrain traversability, recently marketed vehicles are equipped with a limited slip deferential gear (LSD) or a system which switches the control of a four-wheel-drive mode or which includes a mode specialized for rough-terrain traversability. In the mode specialized for rough-terrain traversability, not a general differential gear but an LSD, which is a differential gear with a differential action limiting device, is used not only to inhibit the differential action in accordance with a wheel speed difference between left and right steered wheels but also to strengthen limitation on differential action by arranging for the differential action to be inhibited strongly in advance with a view to improving rough-terrain traversability and starting-up performance from a standstill. As a steering force control system for a vehicle which is equipped with an LSD, there is a steering force control system in which an increase in steering wheel turning force when an LSD is actuated while a vehicle is turning or running on a split grip roadway is suppressed as required in accordance with running conditions of the vehicle, so as to eliminate a sensation of physical disorder felt by the driver when he or she turns the steering wheel, refer to JP-A-8-99642.

Therefore, with the conventional steering force control system installed in the vehicle which employs the LSD to improve the rough-terrain traversability, when the LSD is actuated to generate a difference in drive force between the left and right steered wheels, a torque steer is generated, that is, the running vehicle starts to swerve, and the steering wheel pulls to one side or the other. However, the extent to which the steering wheel so pulls is proportional to the inhibiting force of the LSD when a mulitplate clutch of the LSD slips. However, when the inhibiting force of the LSD is too large, the left and right steered wheels are connected directly to each other, whereby the extent to which the steering wheel pulls is not proportional to the inhibiting force of the LSD. Namely, there is caused a problem that the steering force control system cannot determine to what extent the steering assisting force is necessary for compensation. Further, the multiplate clutch transmits torque from where the rotation speed is fast to where the rotation speed is slow, and hence, it follows that a direction in which torque is transmitted is detected from a wheel speed difference between the left and right steered wheels. However, when the left and right wheels are connected directly to each other, there is caused a problem that a direction in which the steering assisting force is added for compensation becomes unknown.

The invention has been made in view of these situations, and an object thereof is to provide a steering force control system for improving the rough-terrain traversability and body stability of a vehicle having a function to improve the rough-terrain traversability thereof during starting up from a standstill or accelerating under conditions where the posture of the vehicle becomes unstable by adding an appropriate steering assisting force so as to offset a steering reaction force.
The object above can be achieved by the features specified in the claims.

According to an advantageous aspect of the invention, there is provided a steering force control system, comprising:

a steering means for changing directions of pair of left and right wheels in response to control by a driver of a vehicle;
a steering torque detection means for detecting a steering torque when the steering means is controlled;
a steering assist means for adding a steering assisting force to the control of the steering means;
a wheel speed detection means for detecting wheel speeds of the pair of left and right wheels;
a limited slip differential gear for applying an inhibiting torque which is a differential limiting force between the pair of left and right wheels, and
a steering assist control means for controlling the steering assisting force by the steering assist means;
wherein the steering assist control means includes an additional torque calculation means for calculating an additional torque which is sufficient to suppress a steering reaction force applied in the steerig means of a vehicle body which occurs when the limited slip differential gear is actuated through proportional control and integration control of a steering torque detected by the steering torque sensor and a basic assisting torque which is determined by the steering assist control means, and
the steering assist control means controls the steering assist means so that an additional torque calculated by the additional torque calculation means is used in determining the steering assisting force.

According to another advantageous aspect of the invention, there is provided a steering force control system, comprising:

a steering means for changing the direction of pair of left and right wheels in response to control by the driver of a vehicle;

a steering torque detection means for detecting a steering torque when the steering means is controlled;

a steering assist means for adding a steering assisting force to the control of the steering means;

a wheel speed detection means for detecting wheel speeds of the pair of left and right wheels;

a limited slip differential gear for applying an inhibiting torque which is a differential limiting force between the pair of left and right wheels, and

a steering assist control means for controlling the steering assisting force by the steering assist means;

a wheel speed difference change rate calculation means for calculating a wheel speed difference between the pair of left and right wheels and a change rate of the wheel speed difference;

a single wheel spin detection means for detecting a single wheel spin which occurs at either of the pair of left and right wheels when the pair of left and right wheels are accelerated based on a wheel speed difference and a change rate of the wheel speed difference which are calculated by the wheel speed difference change rate calculation means wherein the steering assist control means includes an additional torque calculation means for calculating an additional torque which is sufficient to suppress a steering reaction force applied in the steering means of a vehicle body which occurs when the single wheel spin occurs through proportional control and integration control of a steering torque detected by the steering torque sensor and a basic assisting torque which is determined by the steering assist control means, when the single wheel spin is detected; and

the steering assist control means controls the steering assist means so that an additional torque calculated by the additional torque calculation means used in determining the steering assisting force.

The steering force control system may further comprise an additional torque limiting means for regulating an upper limit of an additional torque, which is calculated by the additional torque calculation means, based on the inhibiting torque of the limited slip differential gear, and for limiting the additional torque.

The additional torque limiting means may limit the additional torque based on a characteristic which becomes maximum when the vehicle starts up from standstill and which is inversely proportional to vehicle speed.

The steering force control system may further comprise: an initial spin determination means for determining whether or not a spin detected by the single wheel spin detection means is a first initial spin that has occurred when the vehicle starts up from a standstill or is accelerated, when the single wheel spin detection means detects the single wheel spin that occurs at either of the pair of left and right wheels; and a parameter setting means for setting parameters which regulate an integration gain and an integration compensation amount used in performing the integration control of the steering torque and the basic assisting torque in accordance with a determination by the initial spin determination means on whether or not the single wheel spin detected by the single wheel spin detection means is the first spin that has occurred when the vehicle starts up from a standstill or is accelerated.

The initial spin determination means may include: a wheel speed condition determination means for determining whether or not a condition exists in which both the wheel speed difference between the left wheel and the right wheel detected by the wheel speed detection means and the change rate of the wheel speed difference between the left and right wheels increase; a wheel speed difference first threshold determination means for determining whether or not a magnitude of the wheel speed difference between the left and right wheels exceeds a first threshold, when a condition in which the wheel speed difference between the left and right wheels and the change rate of the wheel speed difference both increase is detected by the wheel speed condition determination means; an accelerator manipulation determination means for determining whether or not an accelerator is manipulated based on an opening of the accelerator when the opening of the accelerator exceeds a second threshold, in case where the wheel speed difference first threshold determination means determines that the magnitude of the wheel speed difference between the left and right wheels exceeds the first threshold; and a spin determination means for determining an occurrence of a single spin which occurs at either of the left and right wheels when the pair of the left and right wheels are accelerated, when the accelerator manipulation determination means determines that the accelerator is manipulated.

Further, the steering assist control means controls the steering assist means so as to apply the additional torque so that the steering torque detected by the steering torque detection means becomes zero.

Furthermore, the steering assist control means controls the steering assist means when the inhibiting force of the limited slop differential gear is increased so that the left and right wheels are connected directly to each other. The additional torque is calculated so as to satisfy equalities being:

$$Ta0 = Ts + Te;$$

$$Ta1 = (Kp)(Ta0) + (Ki) \int (Ta0 + Tw)dt,$$

wherein Ta0 is the steering reaction force,
Ts is the steering torque detected by the steering torque detection means,
Te is the basic assisting torque,
Ta1 is the additional torque,
Kp is a comparison gain,
Ki is an integration gain, and
Tw is an integration compensation amount.

According to the invention, there is provided an advantage that the steering force control system can be provided which improves the rough-terrain traversability and body stability of the vehicle having the function to improve the rough-terrain traversability thereof during starting up from a standstill or accelerating under conditions where the posture of the vehicle becomes unstable by adding the appropriate steering assisting force so as to offset the steering reaction force.

Brief Description of Drawings

Fig. 1 is a schematic block diagram showing the configuration of a vehicle to which a steering force control system of a first embodiment of the invention is applied,
Fig. 2 is a flowchart showing the operation of the steering force control system of the first embodiment of the invention,
Fig. 3 is a function block diagram of a steering ECU of the steering force control system of the first embodiment of the invention,
Figs. 4A and 4B constitute a flowchart showing a detection of a single wheel spin state by a steering force control system of a second embodiment of the invention,
Fig. 5 is a flowchart showing setting of an integration gain and an integration compensation amount of an integration control by the steering force control system of the second embodiment of the invention,
Fig. 6 is a flowchart showing an additional torque control of a steering assisting force through integration control in the steering force control system of the second embodiment of the invention,
Fig. 7 is a function block diagram of a steering ECU of the steering force control system of the second embodiment of the invention, and

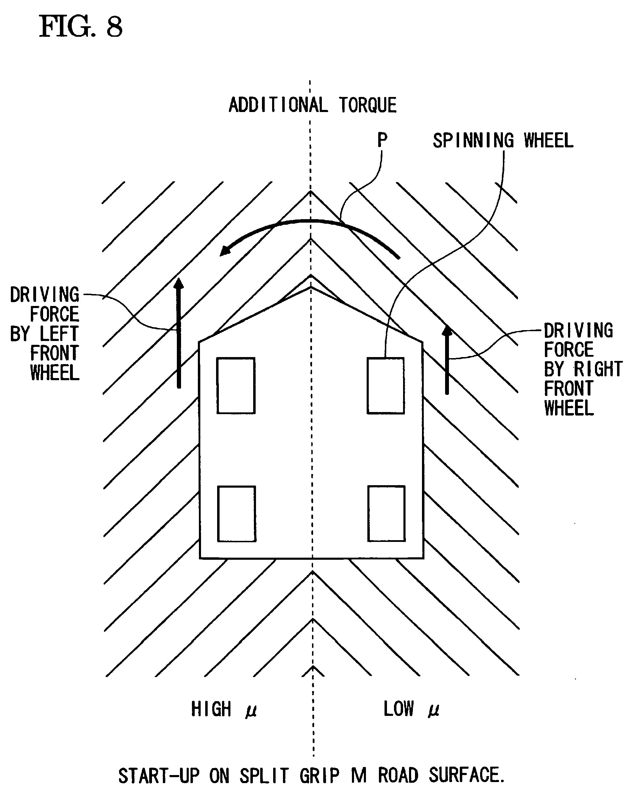

Fig. 8 is an explanatory diagram showing the direction of an additional torque as a steering assisting force in the steering force control system of the embodiments of the invention.

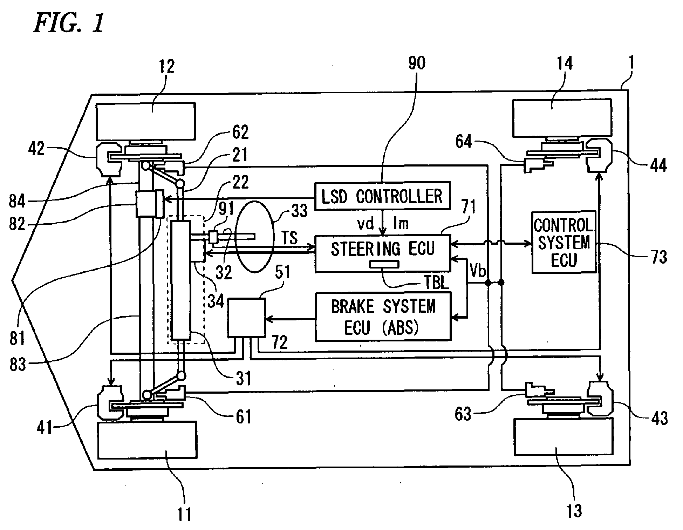

Hereinafter, a first embodiment of the invention will be described. Fig. 1 is a schematic block diagram showing the configuration of a vehicle 1 which is equipped with a steering force control system of the embodiment. The vehicle 1 includes a left front wheel 11, a right front wheel 12, a left rear wheel 13 and a right rear wheel 14. The left front wheel 11 and the right front wheel 12 are steered wheels of the vehicle 1 and are connected to an electrical power-assisted steering or electric power steering 22 via tie rods 21.

The electric power steering 22 includes a steering gearbox 31, a steering shaft 32, a steering wheel 33 and an electric motor 34. The steering wheel 33 is connected to the steering gearbox 31 via the steering shaft 32. Then, a manipulation of the steering wheel 33 by the driver is transmitted to the steering gearbox 31 via the steering shaft 32. Further, the tie rods 21 are actuated via the steering gearbox 31 so as to change the directions of the left front wheel 11 and the right front wheel 12. In other words, a steering system for turning the steered wheels (the front left wheel 11 and the front right wheel 12) includes the steering gearbox 31, the steering shaft 32 and the steering wheel 33.

In addition, the electric motor 34 is provided at the steering gearbox 32. Rotation of the electric motor 32 is inputted into the steering gearbox 31 to generate a steering assisting force in accordance with the manipulation of the steering wheel 33. Namely, the steering assisting force is added to the steering system by the electric motor 34.

Brakes 41, 42, 43, 44 are provided in the left front wheel 11, the right front wheel 12, the left rear wheel 13 and the right rear wheel 14 for applying a braking force thereto. The brake 41 applies a braking force to the left front wheel 11, the brake 42 applies a braking force to the right front wheel 12, the brake 43 applies to a braking force to the left rear wheel 13, and the brake 44 applies a braking force to the right rear wheel 14. The braking forces applied to the left front wheel 11, the right front wheel 12, the left rear wheel 13 and the right rear wheel 14 by the brakes 41, 42, 43, 44, respectively, are controlled by hydraulic pressures supplied from a hydraulic brake unit 51.

Wheel speed sensors are provided at the left front wheel 11, the right front wheel 12, the left rear wheel 13, and the right rear wheel 14 for detecting a wheel speed thereof. A wheel speed sensor 61 is a sensor for detecting a wheel speed (rotation speed) of the left front wheel 11. A wheel speed sensor 62 is a sensor for detecting a wheel speed (rotation speed) of the right front wheel 12. A wheel speed sensor 63 is a sensor for detecting a wheel speed (rotation speed) of the left rear wheel 13. A wheel speed sensor 64 is a sensor for detecting a wheel speed (rotation speed) of the right rear wheel 14.

A driving force is transmitted to the left front wheel 11 and the right front wheel 12 via a front deferential 82 which includes a limited slip deferential gear or a limited slip differential (hereinafter, referred to as an LSD). The left front wheel 11 is connected to a drive shaft 83, and the right front wheel 12 is connected to a drive shaft 84. The left front wheel 11 and the right front wheel 12 are driven by the driving force transmitted to the drive shaft 83 and the drive shaft 84 via the front differential 82 which includes the LSD 81. The LSD 81 generates a torque which inhibits relative rotation between the left and right drive shafts 83, 84 in accordance with an engaged state of an electromagnetic clutch, not show, which is installed therein, so that a differential action limiting force is applied between the left front wheel 11 and the right front wheel 12. An LSD controller 90 controls the differential action limiting force applied by the LSD 81 by controlling the engaged state of the electromagnetic clutch by regulating an electromagnetic current.

In addition, a steering ECU 71 and a brake system ECU 72 are provided. The steering ECU 71 has, as a steering force control function, a general basic function to add a steering assisting force to the steering system by the electric motor 34 so as to reduce a steering torque that is exerted on the steering wheel 33 by the driver. The steering ECU 71 performs a proportional control and an integration control based on wheel speeds detected by the wheel speed sensors 61, 62, 63, 64, a control condition by the brake system ECU 72, a steering torque sensor value Ts detected by a steering torque sensor 91, a basic assisting torque Te by the electric motor 34 of the electric power steering 22, a vehicle speed Vb, and an LSD inhibiting force TL read out of an LSD inhibiting force table TBL. The steering ECU 71 includes a function to improve the rough-terrain traversability and body stability of the vehicle 1 when the vehicle 1 starts up from a standstill or is accelerated on a split grip μ road surface by adding an appropriate steering assisting force to the steering system by the electric motor 34 through those controls. Additionally, the steering ECU 71 includes LSD inhibiting forces used when controlling the differential action limiting force by the LSD 81 in the LSD inhibiting force table TBL, for example, as information in accordance with a difference in rotation speed between the drive shaft 83 and the drive shaft 84. The brake system ECU 72 realizes an ABS (Anti-lock Brake System) function when braking the vehicle 1 by controlling the hydraulic brake unit 51. In the ABS function realized by the brake system ECU 72, at the time of panic or full braking on a low μ road surface, the brake system ECU 72 detects locking states that would occur at the individual wheels based on wheel speeds detected by the wheel speed sensors 61, 62, 63, 64 and controls the hydraulic brake unit 51 so as to apply optimum braking forces to the brakes 41, 42, 43, 44 while avoiding the lock states.

The steering ECU 71 and the brake system ECU 72 are computers and are each made up of storage units such as RAM and ROM, a central processing unit, a timer, an input/output unit such as an I/O port and various types of interfaces. Then, the wheel speed sensors 61, 62, 63, 64 are connected to the steering ECU 71 and the brake system ECU 72 via the input/output unit. In addition, a communication function is provided for transmission and reception of various types of data between the steering ECU 71 and the brake system ECU 72. The steering torque sensor 91 is a sensor for detecting a steering torque generated in association with the manipulation of the steering wheel by the driver and is mounted on the steering shaft 32.

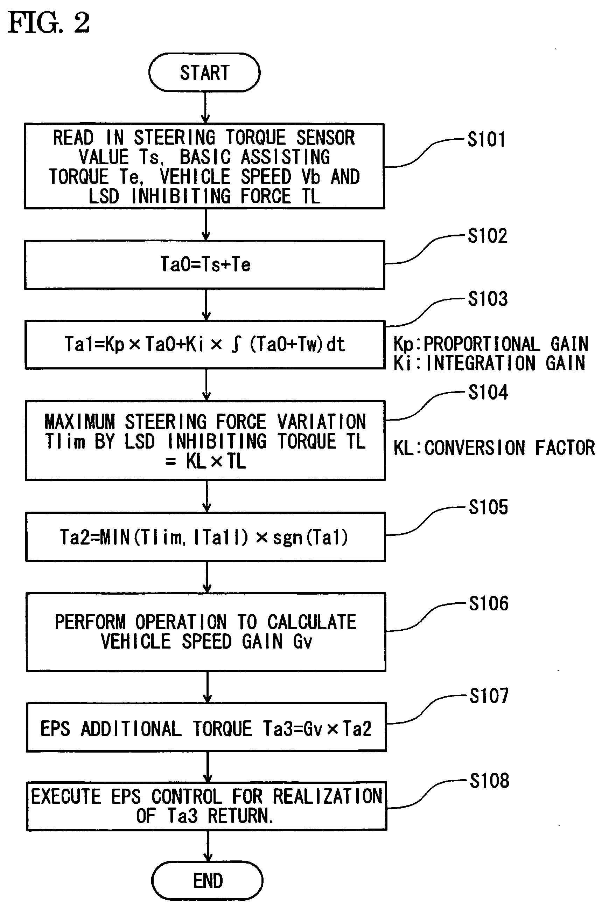

In the steering force control system of this embodiment, the steering assisting force is controlled by the CPU of the steering ECU 71 executing a software program shown by a flowchart in Fig. 2 which is stored in the storage unit of the steering ECU 71 to thereby realize a posture stabilizing control which improves the rough-terrain traversability and body stability of the vehicle. In this posture stabilizing control, when a specific driving condition results in which the posture of the vehicle 1 becomes unstable, an additional torque, which is a steering assisting force, is added in a direction in which the posture of the vehicle 1 is made stable by the electric power steering 22 so as to execute the posture stabilization control. The steering assisting force so added when the posture of the vehicle 1 becomes unstable is obtained against a steering reaction force exerted from the side of a vehicle body when the "steering wheel pulls to one side or the other" on the split grip μ road surface by performing an arithmetic operation through proportional control and integration control of the steering torque sensor value and the basic assisting torque of the electric power steering, so that the steering assisting force which offsets the steering torque sensor value to become zero is added as an additional torque of the electric power steering. In addition, an upper limit value of the additional torque is regulated based on the inhibiting torque of the LSD so as to limit the additional torque, whereby the steering reaction force is suppressed which is a torque exerted on the steering shaft 32 from the side of the vehicle body in association with the "steering wheel pulling to one side or the other" as a result of actuation of the LSD.

In the ABS function of the brake system ECU 72, slip ratios of the left front wheel 11, the right front wheel 12, the left rear wheel 13 and the right rear wheel 14 are calculated from the respective wheel speeds of the wheels which are detected by the wheel speed sensors 61, 62, 63, 64, and hydraulic pressures which are supplied to the brakes 41, 42, 43, 44 from the hydraulic brake unit 51 are controlled so that the calculated slip ratios become optimum.

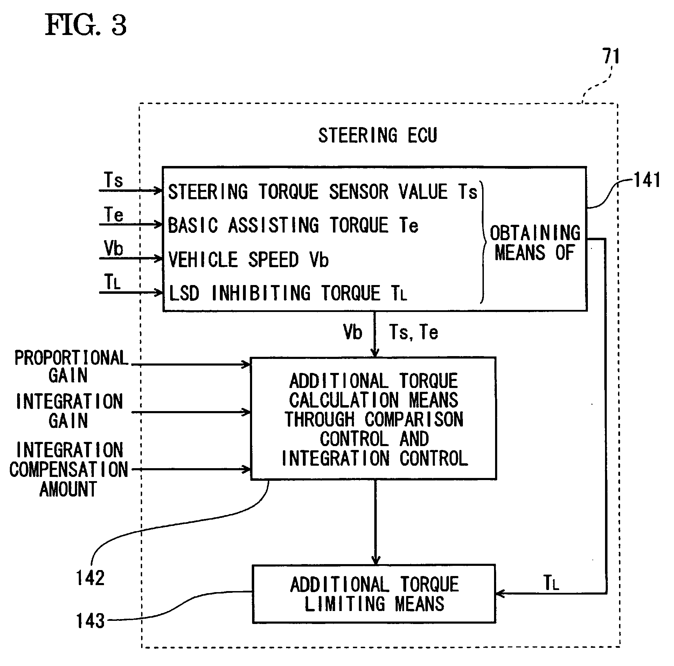

Fig. 3 is a function block diagram of the steering ECU 71 in the steering force control system of this embodiment. The steering ECU 71 includes an obtaining means 141, an additional torque calculation unit 142, and an additional torque limiting means 143. The obtaining means 141 captures the steering torque sensor value Ts detected by the steering torque sensor 91, the basic assisting torque Te by the electric power steering 22, the vehicle speed Vb detected by the vehicle sensor and the LSD inhibiting torque TL by the LSD 81. The additional torque calculation means 142 calculates an additional torque by performing an arithmetic operation through proportional control and integration control of the steering torque detected by the steering torque sensor 91 and the basic assisting torque of the electric power steering 22 which is the steering assist means by using parameters such as a proportional gain Kp, an integration gain Ki and an integration compensation amount. Namely, an additional torque is calculated through the proportional control and integration control of the steering torque detected by the steering torque sensor 91 and the basic assisting torque which is determined through the steering assisting force control by the steering assist means which is the electric power steering 22. This additional torque so calculated is sufficient to suppress the steering wheel pulling phenomenon which occurs when the LSD 81 is actuated to apply an inhibiting torque which is a differential action limiting force as a result of occurrence of a single wheel spin at either the left front wheel 11 or the right front wheel 12. The additional torque limiting means 143 limits the upper limit value of the additional torque which is calculated by the additional torque calculation means 142 for addition by the electric power steering 22 which is the steering assist means by a value Tlim which is proportional to the LSD inhibiting force (torque). Namely, the upper limit of the additional torque calculated by the additional torque calculation means 142 is regulated by the inhibiting torque of the LSD 81 to thereby limit the additional torque. In addition, the additional torque limiting means 143 limits the additional torque based on a characteristic which becomes maximum when the vehicle starts up from a standstill and which is inversely proportional to vehicle speed.

Next, the operation of the steering force control system will be described.

Fig. 2 is a flowchart showing the operation of the steering force control system of this embodiment. Hereinafter, the operation of the steering force control system will be described along the flowchart. Firstly, the steering ECU 71 captures a steering torque sensor value Ts, a basic assisting torque Te that is added by controlling the electric power steering 22, a vehicle speed Vb, and an LSD inhibiting force (torque) TL when the LSD controller 90 controls a differential action limiting force by the LSD 81 (step S101). The steering torque sensor value Ts is a steering torque sensor value detected by the steering torque sensor 91, that is, a steering torque applied as a result of a manipulation of the steering wheel by the driver. The basic assisting torque Te is a basic torque which is added by an additional torque control of the electric power steering 22. The vehicle speed Vb is a vehicle speed which is detected by a vehicle speed sensor, not shown. The LSD inhibiting force (torque) TL is read out by the steering ECU 71 by reference to the LSD inhibiting force table TBL based on a rotation speed difference between the drive shaft 83 and the drive shaft 84 or an operation current Im of the electromagnetic clutch of the LSD. Then, the steering ECU 71 reads in an LSD inhibiting force TL from the LSD inhibiting force table TBL.

Following this, an additional torque amount Ta1 is controlled in accordance with a steering reaction force Ta0 which is an added value of the steering torque sensor value Ts and the basic assisting torque Te as shown in an expression 1 (step S102).

$$Ta0 = Ts + Te \qquad\qquad (1)$$

In controlling the additional torque amount Ta1, an additional torque is obtained by performing a proportional control in accordance with the steering reaction force Ta0 so as to attempt to realize that the steering reaction force becomes zero as shown in an expression 2. Further, in order to be effective even when the steering torque sensor value Ts is small with the hands of the driver taken off from the steering wheel, not only the proportional control but also an integration control is performed to obtain the additional torque Ta1 so as to attempt to realize that the steering reaction force becomes zero (step S103).

$$Ta1 = kp \times Ta0 + Ki \times \int (Ta0 + Tw)dt \qquad\qquad (2)$$

A change in steering reaction force occurring in association with the actuation of the LSD becomes maximum when there is a difference in wheel speed between the left and right steered wheels, and the value refers to Tlim which is proportional to the LSD inhibiting torque TL. Namely, a maximum steering force change amount is expressed by an expression 3 (step S104).

$$Tlim = KL \times TL \tag{3}$$

KL is a conversion factor.

Consequently, the additional torque Ta1 is limited by Tlim. Assuming that an additional torque resulting when the additional torque Ta1 is limited by Tlim is referred to as Ta2, the resulting additional torque Ta2 is expressed by an expression 4 (step S105).

$$Ta2 = MIN(Tlim, |Ta1|) \times sgn(Ta1) \tag{4}$$

Following this, by referring to a table TBL in which a relationship between the vehicle speed Vb and a gain Gv is regulated so that the gain Gv decreases as the vehicle speed Vb increases based on the vehicle speed Vb, a gain Gv of the additional torque control with respect to the vehicle speed Vb is obtained (step S106). Then, the gain Gv is multiplied by Ta2 obtained in step S105 so as to calculate an additional torque Ta3 in accordance with the vehicle speed Vb (step S107), and an additional torque control is executed which realizes the additional torque Ta3 obtained by performing the arithmetic operation above (step S108).

Thus, as has been described heretofore, according to this embodiment, in the function in which the inhibiting force of the LSD is increased in advance with priority given to rough-terrain traversability, even through the left and right steered wheels are connected directly to each other as when the vehicle starts up from a standstill, since the additional torque is calculated by performing the proportional control and integration control of the steering torque sensor value detected by the steering torque sensor 91 and the basic assisting torque of the electric power steering 22 without employing the wheel speeds, a large change in steering reaction can be suppressed, thereby making it possible to provide an advantage that the steering force control system can be provided which enables traversability and stability to be compatible with each other.

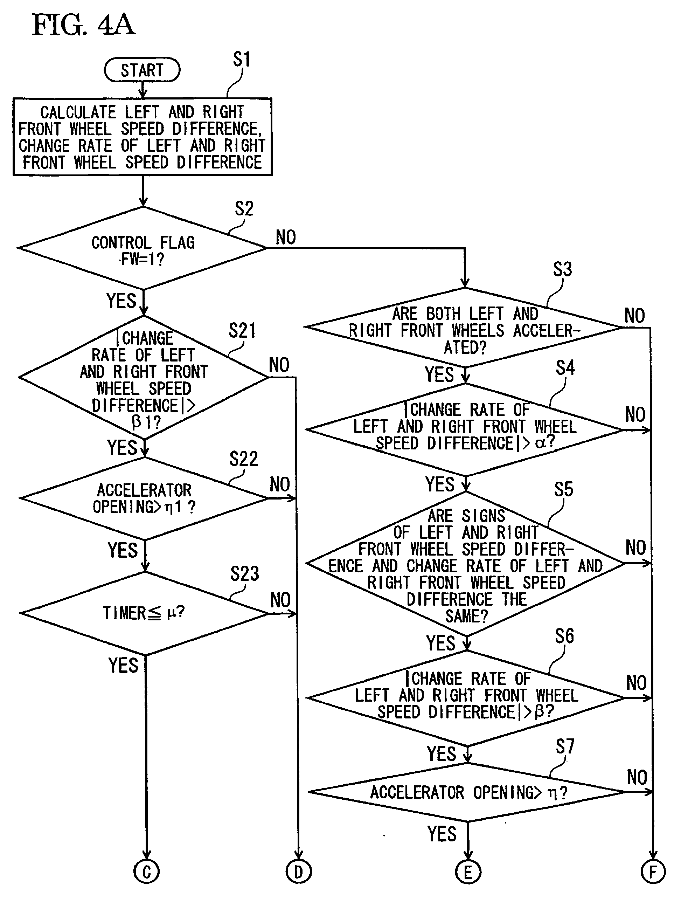

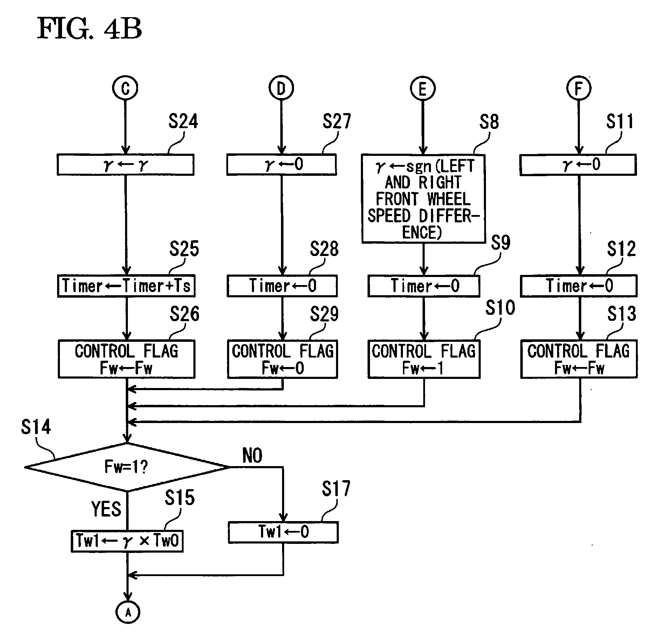

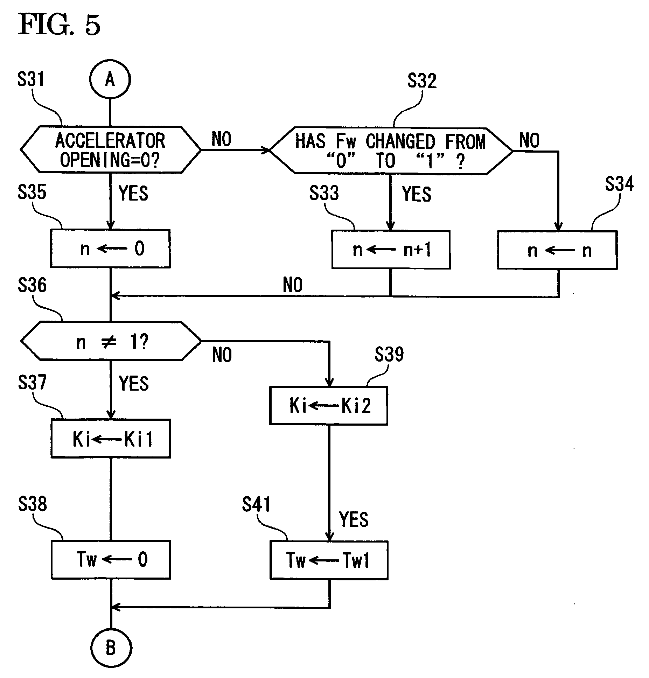

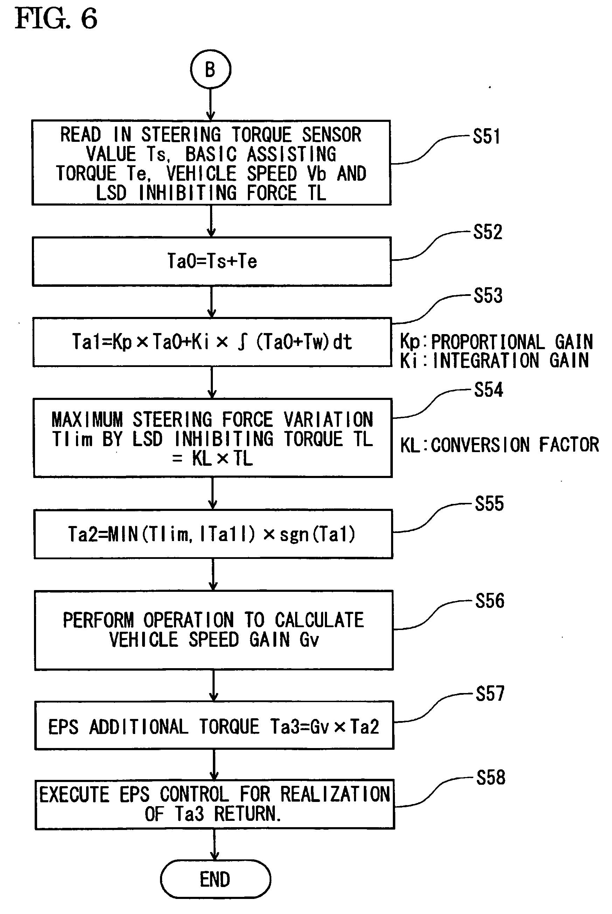

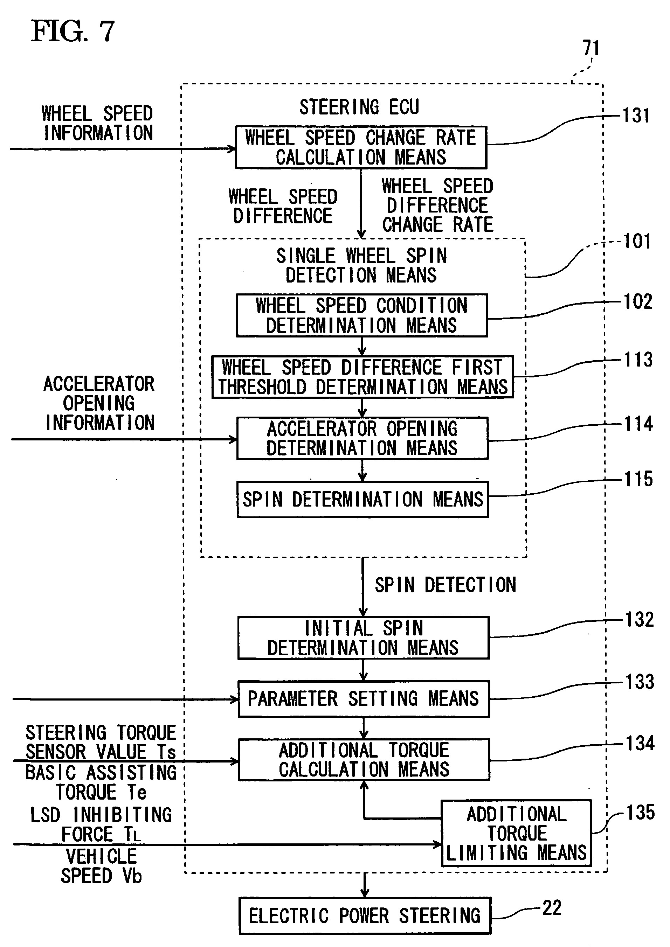

Next, a second embodiment of the invention will be described. Figs. 4A and 4B constitute a flowchart showing a detection of a single wheel spin condition by a steering force control system of this embodiment. Fig. 5 is a flowchart showing a setting of an integration gain and an integration compensation amount in response to the detection of the single wheel spin condition by the steering force control system of this embodiment. Fig. 6 is a flowchart showing an additional torque control of a steering assisting force through an integration control in the steering force control system of this embodiment. Fig. 7 is a function block diagram of a steering ECU of the steering force control system of this embodiment.

Fig. 1 shows the configuration of a vehicle 1 which is equipped with a steering force control system of this embodiment. In this embodiment, in the flowchart shown in Figs. 4A and 4B, when a spin at either a left front wheel 11 or a right front wheel 12 is detected from a wheel speed difference between the left front wheel 11 and the right front wheel 12 and a change rate of the wheel speed difference, set as an integration compensation amount, which will be described later, is a torque value which is sufficient to continue to add a constant additional torque over a constant period of time in an electric power steering 22 of the vehicle which is about to start up from a standstill on a split grip µ road surface so that a steering wheel is manipulated in a direction in which the swerving of the vehicle occurring due to a difference in driving force between the left front wheel 11 and the right front wheel 12 is suppressed, that is, in the direction of the wheel whose wheel speed is smaller or in the direction of a high friction coefficient road surface. Following this, in the flowchart shown in Fig. 5, a first setting is a setting of a control flag. An integration gain and an integration compensation amount are set which are used in performing a proportional control and an integration control of a steering torque detected by a steering torque sensor 91 and a basic assisting torque which is determined by a steering assisting force control of the electric power steering 22 on condition that an accelerator pedal is manipulated, that is, the vehicle is starting up from a standstill or being accelerated. With the integration gain and the integration compensation amount which are set here, in the case of the setting of the control flag being the first setting, an integration control is executed in which the integration gain is set strongly and the integration compensation amount is added. In addition, under a condition where no single wheel slip is detected with no control flag set, the integration gain is set small. Then, in the flowchart in Fig. 6, an additional torque control through proportional control and integration control is executed based on the integration gain and the integration compensation amount which are set according to the flowchart in Fig. 5.

As is shown in Fig. 7, the steering ECU 71 of the steering force control system of this embodiment includes a wheel speed difference change rate calculation means 131, a single wheel spin detection means 101, an initial spin determination means 132, a parameter setting means 133, an additional torque calculation means 134 and an additional torque limiting means 135. In addition, the single wheel spin detection means 101 includes a wheel speed condition determination means 112, a wheel speed difference first threshold determination means 113, an accelerator pedal manipulation determination means 114 and a spin determination means 115.

The wheel speed different change rate calculation means 131 calculates a wheel speed difference between the pair of left and right front wheels and a change rate of the wheel speed difference from wheels speeds of the wheels which are detected by wheel speed sensors 61, 62, 63, 64. The single wheel spin detection means 101 detects a single wheel spin which may occur at either of the pair of left and right front wheels when the pair of left and right wheels are accelerated based on the wheel speed difference and the change rate of the wheel speed difference which are calculated by the wheel speed difference change rate calculation means 131. When the single wheel spin detection means 101 detects a single wheel spin that may occur at either of the pair of left and right wheels, the initial spin determination means 132 determines whether or not the spin so detected is a first initial spin that has occurred when the vehicle starts up from a standstill or is accelerated. The parameter setting means 133 sets parameters which regulate an integration gain and an integration compensation amount used in performing the integration control of the steering torque and the basic assisting torque in accordance with the result of the determination made by the initial spin determination means 132 on whether or not the single wheel spin detected by the single wheel spin detection means 101 is the first spin that has occurred when the vehicle starts up from a standstill or is accelerated.

The additional torque calculation means 134 calculates an additional torque which is sufficient to offset a steering reaction force which is exerted on the steering wheel as a steering wheel pulling phenomenon which occurs when the single wheel spin occurs so as to suppress the steering wheel pulling phenomenon by performing the proportional control and integration control of the steering torque sensor value detected by the steering torque sensor 91 and the basic assisting torque of the electric power steering 22 as an steering assist means. The additional torque limiting means 135 regulates an upper limit value of the additional torque which is calculated by the additional torque calculation means 134 for addition by the electric power steering 22 as the steering assist means based on an inhibiting torque of an LSD 81 to thereby limit the additional torque. In addition, the additional torque limiting means 135 also limits the additional torque based on a characteristic which becomes maximum when the vehicle starts up from a standstill and which is inversely proportional to the vehicle speed Vb.

The wheel speed condition determination means 112 of the single wheel spin detection means 101 determines whether or not a condition exists in which both the wheel speed difference between the left front wheel 11 and the right front wheel 12 detected by the wheel speed sensors 61, 62 and the change rate of the wheel speed difference between the left and right front wheels calculated by the wheel speed difference change rate calculation means 131 increase. When the condition in which the wheel speed difference between the left and right front wheels and the change rate of the wheel speed difference both increase is detected by the wheel speed condition determination means 112, the wheel speed difference first threshold determination means 113 determines whether or not the magnitude of the wheel speed difference between the left and right front wheels exceeds a first threshold. When the wheel speed difference first threshold determination means 113 determines that the magnitude of the wheel speed difference between the left and right front wheels exceeds the first threshold, the accelerator manipulation determination means 114 determines whether or not an accelerator is manipulated based on the opening of the accelerator. When the accelerator manipulation determination means 114 determines that the accelerator is manipulated, the spin determination means 115 determines the occurrence of a single spin which may occur at either of the left and right front wheels when the same wheels are accelerated.

Next, the operation of the steering force control system of this embodiment will be described. In the steering force control system of this embodiment, as is shown in the flowchart in Figs. 4A and 4B, the calculation means 131 of the steering ECU 71 calculates a wheel speed difference between the left front wheel 11 and the right front wheel 12 based on detection outputs from the wheel speed sensor 61 and the wheel speed sensor 62 and a change rate of the wheel speed difference (step S1). Following this, a CPU of the steering ECU 71 determines whether or not a posture stabilization control is being executed based on a control flag Fw (step S2). The control flag Fw is a flag that is set in a condition where the CPU of the steering ECU 71 is executing the posture stabilization control. In its initial condition, the steering ECU 71 of the vehicle 1 is set into a condition where no posture stabilization control is executed. Because of this, the control flag Fw is not set in an initial condition of the steering ECU 71. Consequently, the flow of the single wheel spin detection by the steering force control system proceeds from step S2 to step S3.

In step S3, the wheel speed condition termination means 112 of the steering ECU 71 determines based on the change rate of the wheel speed difference between the left front wheel 11 and the right front wheel 12 calculated in step S1 whether or not a condition exists in which both the wheel speeds of the left front wheel 11 and the right front wheel 12 are being accelerated. Namely, the wheel speed condition determination means 112 determines whether or not a condition exists in which the vehicle 1 is starting up from a standstill. If the wheel speed condition determination means 12 determines as a result of the determination made above that both the wheel speeds of the left front wheel 11 and the right front wheel 12 are not being accelerated, that is, if both the wheel speeds of the left front wheel 11 and the right front wheel 12 stay constant, it is determined that the vehicle is running in a stable condition, and the flow proceeds to step S11.

On the other hand, if the wheel speed condition determination means 112 determines that both the wheel speeds of the left front wheel 11 and the right front wheel 12 are accelerated in step S3, it is determined that the vehicle 1 is starting up from a standstill. Following this, it is determined whether or not an absolute value of the change rate of the wheel speed difference between the left front wheel 11 and the right front wheel 12 exceeds a left and right wheel speed difference change rate on threshold $\alpha$ (step S4). This left and right wheel speed difference change rate on threshold $\alpha$ is a reference value for determining a spin condition at either the left front wheel 11 or the right front wheel 12. Then, if the absolute value of the change rate of the wheel speed difference between the left front wheel 11 and the right front wheel 12 exceeds the left and right wheel speed difference change rate on threshold $\alpha$, it is determined that a spin is occurring at either the left front wheel 11 or the right front wheel 12. If it is determined in step S4 that the absolute value of the change rate of the wheel speed difference between the left front wheel 11 and the right front wheel 12 does not exceed the left and right wheel speed difference change rate on threshold $\alpha$, the flow proceeds to step S11.

On the other hand, if it is determined in step S4 that the absolute value of the change rate of the wheel speed difference between the left front wheel 11 and the right front wheel 12 exceeds the left and right wheel speed difference change rate on threshold $\alpha$, the wheel speed condition determination means 112 of the steering ECU 71 then determines whether or not the sign of the wheel speed difference between the left front wheel 11 and the right front wheel 12 coincides with the sign of the change rate of the wheel speed difference between the left front wheel 11 and the right front wheel 12 (step S5).

When considering based on the left front wheel 11, the wheel speed difference between the wheel speed VL of the left front wheel 11 detected by the wheel speed sensor 61 and the wheel speed VR of the right front wheel 12 detected by the wheel speed sensor 62 is a difference obtained by subtracting the wheel speed VR of the right front wheel 12 from the wheel speed VL of the left front wheel 11. Then, it follows that in case the right front wheel 12 spins, the wheel speed VL of the left front wheel 11 becomes smaller than the wheel speed VR of the right front wheel 12, whereas in case the left front wheel 11 spins, the wheel speed VL of the left front wheel 11 becomes larger than the wheel speed VR of the right front wheel 12. Consequently, in case the right front wheel 12 spins, the sign of the wheel speed difference between the left front wheel 11 and the right front wheel 12 becomes "negative," whereas in case the left front wheel 11 spins, the sign of the wheel speed difference between the left front wheel 11 and the right front wheel 12 becomes "positive."

In addition, in case the condition progresses further in which the right front wheel 12 is spinning, the sign of the change rate of the wheel speed difference between the left front wheel 11 and the right front wheel 12 becomes "negative," whereas in case the spinning condition of the right front wheel 12 is inhibited and the wheel speed difference between the left front wheel 11 and the right front wheel 12 converges in the direction in which the wheel speed difference decreases, the sign of the change rate of the wheel speed difference between the left front wheel 11 and the right front wheel 12 becomes "positive." Additionally, in case the condition progresses further in which the left front wheel 11 is spinning, the sign of the change rate of the wheel speed difference between the left front wheel 11 and the right front wheel 12 becomes "positive," whereas in case the spinning condition of the left front wheel 11 is inhibited and the wheel speed difference between the left front wheel 11 and the right front wheel 12 converges in the direction in which the wheel speed difference decreases, the sign of the change rate of the wheel speed difference between the left front wheel 11 and the right front wheel 12 becomes "negative."

Consequently, in the right wheel spinning condition where the right front wheel 12 is spinning and this condition progresses or the left wheel spinning condition where the left front wheel 11 is spinning and this condition progresses, the sign of the wheel speed difference between the left front wheel 11 and the right front wheel 12 coincides with the sign of the change rage of the wheel speed difference between the left front wheel 11 and the right front wheel 12. Then, where the spinning condition of the left front wheel 11 or the right front wheel 12 is inhibited although the left front wheel 11 or the right front wheel 12 spins and converges in such a way that the wheel speed difference between the left front wheel 11 and the right front wheel 12 decreases, the sing of the wheel speed difference between the left front wheel 11 and the right front wheel 12 does not coincide with the sign of the change rage of the wheel speed difference between the left front wheel 11 and the right front wheel 12.

In step S5, it is determined whether or not the right front wheel spinning situation or the left front wheel spinning situation is continuing by determining whether or not the sign of the wheel speed difference between the left front wheel 11 and the right front wheel 12 coincides with the sign of the change rate of the wheel speed difference between the left front wheel 11 and the right front wheel 12. If it is determined in step S5 that the sign of the wheel speed difference between the left front wheel 11 and the right front wheel 12 does not coincide with the sign of the change rate of the wheel speed difference between the left front wheel 11 and the right front wheel 12, then, the flow proceeds to step S11. On the other hand, if it is determined in step S5 that the sign of the wheel speed difference between the left front wheel 11 and the right front wheel 12 coincides with the sign of the change rate of the wheel speed difference between the left front wheel 11 and the right front wheel 12, then, the flow proceeds to step S6.

In step S6, the wheel speed difference first threshold determination means 113 of the steering ECU 71 determines whether or not an absolute value of the left and right wheel speed difference between the left front wheel 11 and the right front wheel 12 that has been detected and calculated exceeds a left and right wheel speed difference on threshold p. The left and right wheel speed difference on threshold $\beta$ is, for example, an on threshold having a high hysteresis characteristic for use in determining a situation in which a spin is occurring at the left front wheel 11 or the right front wheel 12 from the wheel speed difference between the left front wheel 11 and the right front wheel 12. If the wheel speed difference first threshold determination means 113 determines that the absolute value of the left and right wheel speed difference between the left front wheel 11 and the right front wheel 12 does not exceed the left and right wheel speed difference on threshold $\beta$, there is no situation in which a spin is occurring at the left front wheel 11 or the right front wheel 12, and hence, the flow proceeds to step S11.

On the other hand, If the wheel speed difference first threshold determination means 113 determines that the absolute value of the left and right wheel speed difference between the left front wheel 11 and the right front wheel 12 exceeds the left and right wheel speed difference on threshold $\beta$, the accelerator manipulation determination means 114 of the steering ECU 71 then determines whether or not the accelerator opening exceeds an accelerator opening on threshold $\eta$ (step S7), so as to check whether or not the accelerator is manipulated by the driver. The determination of whether or not the accelerator opening exceeds the accelerator opening on threshold $\eta$ is performed based on information on accelerator opening obtained from a control system ECU 73 by the communication of the steering ECU 71 with the control system ECU 73. In addition, this accelerator opening on threshold is, for example, a threshold having a high hysteresis characteristic for use in detecting a manipulation of the accelerator of the vehicle 1 by the driver.

As a result of the determination, if the accelerator manipulation determination means 114 determines that the accelerator opening does not exceed the accelerator opening on threshold $\eta$, it is determined that the accelerator of the vehicle 1 is not manipulated by the driver, and then, the flow proceeds to step S11. Processes after step S11 are processes where the posture stabilization control is not executed. The CPU of the steering ECU 71 sets "0" to an additional torque direction variable $\gamma$ which regulates the direction of additional torque. Then, in the following step S12, the CPU sets "0" to a timer value Timer which regulates a control cycle of the posture stabilization control. Further, in the following step S13, the CPU maintains the just prior state for the control flag Fw. In this case, the flow proceeds to step S14 without setting "1" to the control flag Fw. In step S14, it is determined whether or not "1" is set to the control flag Fw, that is, whether or not the control flag Fw is set. However, as this occurs, "1" is not set to the control flag Fw. Because of this, in the following step S17, "0" is set to an integration compensation amount Tw1, and the flow proceeds to the flowchart shown in Fig. 15.

In step S7, if the accelerator manipulation determination means 114 determines that the accelerator opening exceeds the accelerator opening on threshold $\eta$, the flow proceeds to step S8. In step S8, an additional torque direction determination means 121 of the steering ECU71 sets a sign in accordance with the left and right wheel speed difference that was obtained by performing the arithmetic operation to the additional torque variable $\gamma$ by employing a signum function "sgn". In the signum function sgn, sgn(a) equals to 1 when "a" is positive, sgn(a) equals to -1 when "a" is negative, and sgn(a) equals to 0 when "a" is 0. Further, in the following step S9, the CPU of the steering ECU 71 sets "0" to the timer value Timer which regulates the control cycle of the posture stabilization control. In the following step S10, the CPU sets "1" to the control flag Fw, and then, the flow proceeds to step S14. "1" is set to the control flag Fw in step S10 on condition that all the following conditions are met; both the wheel speeds of the left front wheel 11 and the right front wheel 12 are accelerated (step S3), the absolute value of the change rate of the wheel speed difference between the left front wheel 11 and the right front wheel 12 exceeds the left and right wheel speed difference change rate on threshold $\alpha$ (step S4), the sign of the wheel speed difference between the left front wheel 11 and the right front wheel 12 coincides with the sign of the change rate of the wheel speed difference between the left front wheel 11 and the right front wheel 12 (step S5), the absolute value of the change rate of the wheel speed difference between the left front wheel 11 and the right front wheel 12 exceeds the left and right wheel speed difference on threshold $\beta$ (step S6), and the accelerator opening exceeds the accelerator opening on threshold $\eta$ (step S7). Namely, "1" is set to the control flag Fw in step S10 in the right wheel spinning condition where the right front wheel 12 is spinning and this condition progresses or the left wheel spinning condition where the left front wheel 11 is spinning and this condition progresses.

In step S14, although it is determined whether or not "1" is set to the control flag Fw, if all the conditions described above are established, "1" is set to the control flag Fw. Namely, since the control flag is set, in the following step S15, the additional torque variable $\gamma$ which regulates the direction of the additional torque is multiplied by an EPS additional torque set value Tw0, and what results from the multiplication is set as an integration compensation amount Tw1. Then, the flow proceeds to the flowchart shown in Fig. 5.

In the flowchart shown in Fig. 5, an integration gain and an integration compensation amount for use when the steering ECU 71 adds an additional torque through integration control are set based on the setting of the control flag Fw through the processes shown in the flowchart shown in Figs. 4A and 4B. In the flowchart shown in Fig. 5, firstly, the steering ECU 71 determines whether or not the accelerator opening is "zero" (step S31). As a result of the determination made, if the steering ECU 71 determines that the accelerator opening is "zero" or that the accelerator is not manipulated and hence no acceleration is performed, the flow proceeds to step S35. In step S35, "0" is set to a counter value n of a counter.

On the other hand, in step S31, if the steering ECU 71 determines that the accelerator opening is not "zero" or that the accelerator is being manipulated and hence acceleration is being performed, the flow proceeds to step S32.

In step S32, it is determined whether or not the setting of the control flag Fw has changed from "0" to "1" or whether or not the control flag Fw has been set for the first time. In the initial state, the control flag Fw is set to "0", which means that the control flag Fw is not set, and as is shown in the flowchart in Figs. 4A and 4B, "1" is set to the control flag Fw for the first time on condition that all the following conditions are met; both the wheel speeds of the left front wheel 11 and the right front wheel 12 are accelerated (step S3), the absolute value of the change rate of the wheel speed difference between the left front wheel 11 and the right front wheel 12 exceeds the left and right wheel speed difference change rate on threshold α (step S4), the sign of the wheel speed difference between the left front wheel 11 and the.right front wheel 12 coincides with the sign of the change rate of the wheel speed difference between the left front wheel 11 and the right front wheel 12 (step S5), the absolute value of the change rate of the wheel speed difference between the left front wheel 11 and the right front wheel 12 exceeds the left and right wheel speed difference on threshold β (step S6), and the accelerator opening exceeds the accelerator opening on threshold η (step S7). Namely, "1" is set to the control flag Fw in step S10 for the first time in the right wheel spinning condition where the right front wheel 12 is spinning and this condition progresses or the left wheel spinning condition where the left front wheel 11 is spinning and this condition progresses. In other words, "1" is set to the control flag Fw in step S10 when a single wheel spin condition is progressing at either the left front wheel 11 or the right front wheel 12.

Consequently, in step S32, if it is determined that the setting of the control flag Fw has changed from "0" to "1" for the first time, the count value n of the counter is increased by one from the present count value (step S33). On the other hand, in step S32, if it is determined that the setting of the control flag Fw has not changed from "0" to "1," that is, if it is determined that the control flag Fw stays at "0," or that the control flag Fw stays at "1," the count value n of the counter is made to stay at the present value in step S34. Then, the flow proceeds to step S36. In step S36, it is determined whether or not the count value n of the counter is "1." As a result of the determination made, if it is determined that the count value n of the counter is not "1," the flow then proceeds to step S37, where the integration gain ki of the integration control is set to ki1. Then, in step S38, the integration compensation amount Tw of the integration control is set to "0" and the flow proceeds to the flowchart shown in Fig. 6. If it is determined in step S36 that the count value n of the counter is not "1," this means that the accelerator opening is "0," that is, the accelerator is not manipulated or that the accelerator opening is "1," that is, the accelerator is manipulated. This also means that the control flag Fw stays at "0" or that the control flag Fw stays at "1," excluding when the setting of the control flag Fw has changed from "0" to "1" for the first time.

On the other hand, if it is determined in step S36 that the count value n of the counter is "1," or if it is determined in step S32 that the setting of the control flag Fw has changed from "0" to "1" for the first time, that is, where with the accelerator depressed, the single wheel spin condition is progressing at either the left front wheel 1 or the right front wheel 2 for the first time, the flow proceeds to step S39. In step S39, the integration gain ki of the integration control is set to ki2. Note that the integration gain ki2 here is larger than the integration gain ki1. Then, in the following step S41, the integration compensation amount Tw of the integration control is set to Tw1, and the flow proceeds to the flowchart shown in Fig. 6.

In the flowchart shown in Fig. 6, an additional torque control involving no steering reaction force is executed by employing the integration gain and the integration compensation amount which are set by the series of processes shown in the flowchart in Fig. 5. In the flowchart shown in Fig. 6, firstly, the steering ECU 71 captures a steering torque sensor value Ts, a basic assisting torque Te that is added by controlling the electric power steering 22, a vehicle speed Vb, and an LSD inhibiting force (torque) TL when the LSD controller 90 controls a differential action limiting force by the LSD 81 (step S51). The steering torque sensor value Ts is a steering torque sensor value detected by the steering torque sensor 91, that is, a steering torque applied as a result of a manipulation of the steering wheel by the driver. The basic assisting torque Te is a basic torque which is added by an additional torque control of the electric power steering 22. The vehicle speed Vb is a vehicle speed which is detected by a vehicle speed sensor, not shown. The LSD inhibiting force (torque) TL is read out by the steering ECU 71 by reference to the LSD inhibiting force table TBL based on a rotation speed difference between the drive shaft 83 and the drive shaft 84 or an operation current Im of the electromagnetic clutch of the LSD. Then, the steering ECU 71 reads in an LSD inhibiting force TL from the LSD inhibiting force table TBL.

Following this, an additional torque amount Ta1 is controlled in accordance with a steering reaction force Ta0 which is an added value of the steering torque sensor value Ts and the basic assisting torque Te as shown in an expression 5 (step S52).

$$Ta0 = Ts + Te \tag{5}$$

In controlling the additional torque amount Ta1, an additional torque is obtained by performing a proportional control in accordance with the steering reaction force Ta0 so as to attempt to realize that the steering reaction force becomes zero. Further, in order to be effective even when the steering torque sensor value Ts is small with the hands of the driver taken off from the steering wheel, not only the proportional control but also an integration control is performed to obtain the additional torque Ta1 so as to attempt to realize that the steering reaction force becomes zero as shown in an expression 6 (step S53). Namely,

$$Ta1 = kp \times Ta0 + Ki \times \int(Ta0 + Tw)dt \qquad (6)$$

A change in steering reaction force occurring in association with the actuation of the LSD becomes maximum when there is a difference in wheel speed between the left and right steered wheels, and the value refers to Tlim which is proportional to the LSD inhibiting torque TL. Namely, a maximum steering force change amount is expressed by an expression 7 (step S54).

$$Tlim = KL \times TL \qquad (7)$$

KL is a conversion factor.

Consequently, the additional torque Ta1 is limited by Tlim. Assuming that an additional torque resulting when the additional torque Ta1 is limited by Tlim is referred to as Ta2, the resulting additional torque Ta2 is expressed by an expression 8 (step S55).

$$Ta2 = MIN(Tlim, |Ta1|) \times sgn(Ta1) \qquad (8)$$

Following this, by referring to a table TBL in which a relationship between the vehicle speed Vb and a gain Gv is regulated so that the gain Gv decreases as the vehicle speed Vb increases based on the vehicle speed Vb, a gain Gv of the additional torque control with respect to the vehicle speed Vb is obtained (step S56). Then, the gain Gv is multiplied by Ta2 obtained in step S55 so as to calculate an additional torque Ta3 in accordance with the vehicle speed Vb (step S57), and an additional torque control is executed which realizes the additional torque Ta3 obtained by performing the arithmetic operation above (step S58).

The CPU of the steering ECU 71 also executes the series of processes starting from step S1 in the flowchart shown in Figs. 4A and 4B in the next program cycle. In this program cycle, the calculation means 131 calculates a wheel speed difference between the left front wheel 11 and the right front wheel 12 based on detection outputs from the wheel speed sensor 61 and the wheel speed sensor 62 and a change rate of the wheel speed difference in step S1. Following this, the CPU of the steering ECU 71 determines whether or not the posture stabilization control is being executed by determining whether or not the control flag Fw is set (step S2). Here, if the control flag Fw is set in step S10 in the previous program cycle, the flow proceeds from step S2 to step S21.

In step S21, the steering ECU 71 determines whether or not an absolute value of the wheel speed difference between the left front wheel 11 and the right front wheel 12 is larger than a left and right wheel speed difference threshold β1. This left and right wheel speed difference threshold β1 is a lower off threshold which makes up, for example, a hysteresis characteristic for use in detecting a wheel speed difference between the left front wheel 11 and the right front wheel 12 when a spin is occurring at either the left front wheel 11 or the right front wheel 12. The fact that the absolute value of the wheel speed difference between the left front wheel 11 and the right front wheel 12 exceeds the left and right wheel speed difference threshold β1 indicates that a spin is occurring at either the left front wheel 11 or the right front wheel 12 and hence, the vehicle is running in an unstable fashion. On the contrary, the fact that the absolute value of the wheel speed difference between the left front wheel 11 and the right front wheel 12 does not exceed the left and right wheel speed difference threshold β1 indicates that a spin is occurring at neither the left front wheel 11 nor the right front wheel 12 and hence, the vehicle is running in a stable fashion.

If it is determined in step S21 that the absolute value of the wheel speed difference between the left front wheel 11 and the right front wheel 12 is smaller than the left and right wheel speed difference threshold β1, this means that a spin is occurring at neither the left front wheel 11 nor the right front wheel 12, the vehicle 1 running in a stable fashion. Thus, the flow proceeds to step S27.

On the contrary, if it is determined in step S21 that the absolute value of the wheel speed difference between the left front wheel 11 and the right front wheel 12 is larger than the left and right wheel speed difference threshold β1, the accelerator manipulation determination means 114 of the steering ECU 71 further determines whether or not an accelerator opening then is larger than an accelerator opening off threshold η1 (step S22). This accelerator opening off threshold η1 is a lower off threshold which makes up, for example, a hysteresis characteristic for use in detecting an accelerator opening or determining whether or not the accelerator is manipulated. In case the accelerator opening is larger than the accelerator opening off threshold η1, it is determined that the driver is manipulating the accelerator or the vehicle 1 is being accelerated.

If it is determined in step S22 that the accelerator opening is smaller than the accelerator opening off threshold η1, this means that the driver is not manipulating the accelerator or the vehicle 1 is not being accelerated. Then, the flow proceeds to step S27.

On the contrary, if it is determined in step S22 that the accelerator opening is larger than the accelerator opening off threshold η1, the flow proceeds to step S23. In step S23, it is determined whether or not a timer value equal to or smaller than a flag-on-maximum-time μ is set to the timer. This flag-on-maximum-time μ is such as to regulate a period of time during which the flag Fw is set, that is, maximum time during which the additional torque control is executed. Consequently, if it is determined in step S23 that a timer value exceeding the flag-on-maximum-time μ is set to the timer, that is, if the period of time during which the additional torque control is executed exceeds the flag-on-maximum-time μ, the flow proceeds to step S27.

When the determination process in step S23 is executed, the timer value "0" is set to the timer in the previous program cycle. Because of this, in step S23, it is determined that the timer value equal to or smaller than the flag-on-maximum-time μ is set to the timer, and the flow proceeds to step S24. In step S24, an additional torque direction variable γ is set to a variable which regulates the direction of the additional torque. In the following step S25, as a timer value, a control period Ts is added to the present timer value of the timer. Then, the control flag Fw is set, that is, "1" is set to the control flag Fw (step S26), and the flow proceeds to step S14.

On the contrary, if the flow proceeds to step 27 in step S21, step S22 or step S23, that is, if it is determined that the vehicle 1 is running in the stable fashion, the vehicle 1 is not being accelerated, or the period of time during which the additional torque control is being executed exceeds the maximum time μ, respectively, "0" is set to the additional torque direction variable γ in step S27. In the following step S28, "0" is set to the timer as a timer value. Then, in the following step S29, "0" is set to the control flag Fw, and the flow proceeds to step S14.

In step S14, the CPU of the steering ECU 71 determines whether or not "1" is set to the control flag Fw, that is, whether or not the control flag Fw is set. However, if the flow proceeds to step S27 in step S21, step S22 or step S23, that is, if it is determined that the vehicle 1 is running in the stable fashion, the vehicle 1 is not being accelerated or the period of time during which the additional torque control is being executed exceeds the maximum time μ, respectively, in step S29, "0" is set to the control flag Fw, and hence, the control flag Fw is not set. Because of this, the flow proceeds to step S17, where "0" is set to the integration compensation amount Tw1, and then, the flow proceeds to the flowchart shown in Fig. 5.

On the contrary, it is determined in step S21, step S22 or step S23 that the spin is occurring at either the left front wheel 11 or the right front wheel 12 and hence, the vehicle is running in the unstable fashion, the vehicle 1 is being accelerated, or the period of time during which the additional torque control. is being executed does not exceed the maximum time μ, respectively, "1" is set to the control flag Fw, that is, the control flag Fw is set. Because of this, the flow proceeds to step S15, where the additional torque direction variable γ is multiplied by an EPS additional torque set value Tw0, and what results is set as an integration compensation amount Tw1. Then, the flow proceeds to the flowchart shown in Fig. 5.

Processes that are performed in the flowcharts in Figs. 5 and 6 are similar to those that have been described with respect to the conditions where "1" is set to the control flag Fw, and hence, the detailed description thereof will be omitted here. However, in the flowchart shown in Fig. 5, the steering ECU 71 sets the integration gain and the integration compensation amount for use in adding the additional torque through the integration control based on the setting of the control flag Fw through the series of processes shown in the flowchart in Figs. 4A and 4B. Then, in the flowchart shown in Fig. 6, the additional torque control involving no steering reaction force is executed by employing the integration gain and the integration compensation which are set through the series of processes shown in the flowchart in Fig. 5.

Thus, as has been described heretofore, according to this embodiment, when the vehicle starts up from a standstill or is accelerated by the driver manipulating the accelerator on the split grip μ road surface, in the event that a single wheel spin is detected at either the left front wheel 11 or the right front wheel 12 based on the wheel speeds of the left front wheel 11 or the right front wheel 12, "1" is set to the control flag Fw. Then, when this is the first time that the control flag Fw has been set, the steering ECU 71 determines the parameters such as the integration gain and the integration compensation amount which are used in performing the integration control of the steering torque detected by the steering torque sensor 91 and the basic assisting torque which is determined by the steering assisting force control of the electric power steering 22. The integration gain and the integration compensation amount which are determined then are set to larger values than those of the integration gain and the integration compensation amount which result when no single wheel spin is detected. Then, using the integration gain and the integration compensation amount so determined as parameters, the steering ECU 71 calculates the additional torque that is to be added to the steering wheel when the steering wheel is turned and which is sufficient to offset the steering reaction force which is exerted to the steering wheel being turned as the steering wheel pulling phenomenon that occurs when the single wheel spin is occurring to thereby inhibit the steering wheel pulling phenomenon by performing the proportional control and the integration control of the steering torque sensor value Ts and the basic assisting torque Te. Thus, the steering force control system is provided which when the single wheel spin is not detected, inhibits a phase delay relative to the change in steering torque sensor value and the excessive control so as to prevent the driver feeling the sensation of physical disorder when he or she is turning the steering wheel, and when the single wheel spin is detected, performs the integration control based on the integration gain and the integration compensation amount whose values are larger than those of the integration gain and the integration compensation amount which result when no single wheel spin is detected so as to effectively eliminate the change in steering reaction force which occurs in association with the actuation of the LSD, thereby making it possible to realize an improvement in stability of the vehicle and an improvement in maneuverability of the steering wheel thereof when the vehicle starts up from a standstill or is accelerated on the split grip $\mu$ road surface.

**Claims**

1. A steering force control system, comprising:

   a steering means for changing the direction of pair of left and right wheels in response to control by a driver of a vehicle;
   a steering torque detection means for detecting a steering torque when the steering means is controlled;
   a steering assist means for adding a steering assisting force to the control of the steering means;
   a wheel speed detection means for detecting wheel speeds of the pair of left and right wheels;
   a limited slip differential gear for applying an inhibiting torque which is a differential limiting force between the pair of left and right wheels, and
   a steering assist control means for controlling the steering assisting force by the steering assist means;
   wherein the steering assist control means includes an additional torque calculation means for calculating an additional torque which is sufficient to suppress a steering reaction force applied in the steering means of a vehicle body which occurs when the limited slip differential gear is actuated, through proportional control and integration control of a steering torque $T_s$ detected by the steering torque sensor and a basic assisting torque $T_e$ which is determined by the steering assist control means, and
   the steering assist control means controls the steering assist means so that an additional torque calculated by the additional torque calculation means is used in determining the steering assisting force.

2. The steering force control system according to claim 1, further comprising:

   an additional torque limiting means for regulating an upper limit of an additional torque, which is calculated by the additional torque calculation means, based on an inhibiting torque of the limited slip differential gear, and for limiting the additional torque.

3. The steering force control system according to claim 2, wherein
   the additional torque limiting means limits the additional torque based on a characteristic which becomes maximum when the vehicle starts up from standstill and which is inversely proportional to vehicle speed.

4. A steering force control system, comprising:

   a steering means for changing the direction of a pair of left and right wheels in response to control by the driver of a vehicle;
   a steering torque detection means for detecting a steering torque when the steering means is controlled;
   a steering assist means for adding a steering assisting force to the control of the steering means;
   a wheel speed detection means for detecting wheel speeds of the pair of left and right wheels;
   a limited slip differential gear for applying an inhibiting torque which is a differential limiting force between the pair of left and right wheels, and
   a steering assist control means for controlling the steering assisting force by the steering assist means;
   a wheel speed difference change rate calculation means for calculating a wheel speed difference between the pair of left and right wheels and a change rate of the wheel speed difference;
   a single wheel spin detection means for detecting a single wheel spin which occurs at either of the pair of left and right wheels when the pair of left and right wheels are accelerated based on a wheel speed difference and a change rate of the wheel speed difference which are calculated by the wheel speed difference change rate calculation means,
   wherein the steering assist control means includes an additional torque calculation means for calculating an additional torque which is sufficient to suppress a steering reaction force applied in the steering means of a vehicle body which occurs when the single wheel spin occurs, through proportional control and integration control of a steering torque detected by the steering torque sensor and a basic assisting torque which is determined by the steering assist control means, when the single wheel spin is detected; and

the steering assist control means controls the steering assist means so that an additional torque calculated by the additional torque calculation means is used in determining the steering assisting force.

5. The steering force control system according to claim 4, further comprising:

an additional torque limiting means for regulating an upper limit of an additional torque, which is calculated by the additional torque calculation means, based on the inhibiting torque of the limited slip differential gear, and for limiting the additional torque.

6. The steering force control system according to claim 5, wherein
the additional torque limiting means limits the additional torque based on a characteristic which becomes maximum when the vehicle starts up from standstill and which is inversely proportional to vehicle speed.

7. The steering force control system according to any one of claims 4 to 6, further comprising:

an initial spin determination means for determining whether or not a spin detected by the single wheel spin detection means is a first initial spin that has occurred when the vehicle starts up from a standstill or is accelerated, when the single wheel spin detection means detects the single wheel spin that occurs at either of the pair of left and right wheels; and

a parameter setting means for setting parameters which regulate an integration gain and an integration compensation amount in accordance with a determination by the initial spin determination means.

8. The steering force control system according to any one of claims 4 to 7, wherein the initial spin determination means includes:

a wheel speed condition determination means for determining whether or not a condition exists in which both the wheel speed difference between the left wheel and the right wheel detected by the wheel speed detection means and the change rate of the wheel speed difference between the left and right wheels increase;

a wheel speed difference first threshold determination means for determining whether or not a magnitude of the wheel speed difference between the left and right wheels exceeds a first threshold, when a condition in which the wheel speed difference between the left and right wheels and the change rate of the wheel speed difference both increase is detected by the wheel speed condition determination means;

an accelerator manipulation determination means for determining whether or not an accelerator is manipulated based on an opening of the accelerator when the opening of the accelerator exceeds a second threshold, in case where the wheel speed difference first threshold determination means determines that the magnitude of the wheel speed difference between the left and right wheels exceeds the first threshold; and

a spin determination means for determining an occurrence of a single spin which occurs at either of the left and right wheels when the pair of the left and right wheels are accelerated, when the accelerator manipulation determination means determines that the accelerator is manipulated.

9. The steering force control system according to claim 1 or 4, wherein
the steering assist control means controls the steering assist means so as to apply the additional torque so that the steering torque detected by the steering torque detection means becomes zero.

10. The steering force control system according to any one of claims 1 to 6, wherein
the steering assist control means controls the steering assist means when the inhibiting force of the limited slop differential gear is increased so that the left and right wheels are connected directly to each other.

11. The steering force control system according to any one of claims 1 to 6, wherein
the additional torque is calculated so as to satisfy equalities being:

$$Ta0 = Ts + Te;$$

$$Ta1 = (Kp)(Ta0) + (Ki) \int (Ta0 + Tw)dt,$$

wherein Ta0 is the steering reaction force,
Ts is the steering torque detected by the steering torque detection means,
Te is the basic assisting torque,
Ta1 is the additional torque,
Kp is a comparison gain,
Ki is an integration gain, and
Tw is an integration compensation amount.

**Patentansprüche**

1.  Lenkkraftregelsystem, das aufweist:

    ein Lenkmittel zur Änderung der Richtungen eines Paars eines linken und rechten Rads als Reaktion auf eine Steuerung eines Fahrers eines Fahrzeugs;
    ein Lenkmomentermittlungsmittel zur Ermittlung eines Lenkmoments, wenn das Lenkmittel gesteuert wird;
    ein Lenkunterstützungsmittel zum Addieren einer Lenkunterstützungskräft zur Steuerung des Lenkmittels;
    ein Raddrehzahlermittlungsmittel zur Ermittlung der Raddrehzahlen des Paars des linken und rechten Rads;
    ein Sperrdifferentialgetriebe zum Anwenden eines hemmenden Moments, das eine Differentialbegrenzungskraft zwischen dem Paar des linken und rechten Rads ist, und ein Lenkunterstützungsregelmittel zum Regeln der Lenkunterstützungskraft durch das Lenkunterstützungsmittel;
    wobei das Lenkunterstützungsregelmittel ein Berechnungsmittel eines zusätzlichen Moments zum Berechnen eines zusätzlichen Moments aufweist, das ausreichend ist, eine Lenkreaktionskraft zu unterbinden, die im Lenkmittel einer Fahrzeugkarosserie ausgeübt wird, die auftritt, wenn das Sperrdifferentialgetriebe betätigt wird, durch Proportionalregelung und Integrationsregelung eines Lenkmoments Ts, das durch den Lenkmomentsensor ermittelt wird, und eines Grundunterstützungsmoments Te, das durch das Lenkunterstützungsregelmittel bestimmt wird, und
    das Lenkunterstützungsregelmittel das Lenkunterstützungsmittel so regelt, dass ein zusätzliches Moment, das durch das Berechnungsmittel eines zusätzlichen Moments berechnet wird, bei der Bestimmung der Lenkunterstützungskraft verwendet wird.

2.  Lenkkraftregelsystem nach Anspruch 1, das ferner aufweist:

    ein Begrenzungsmittel des zusätzlichen Moments zum Regeln einer Obergrenze eines zusätzlichen Moments, das durch das Berechnungsmittel eines zusätzlichen Moments berechnet wird, beruhend auf einem hemmenden Moment des Sperrdifferentialgetriebes, und zum Begrenzen des zusätzlichen Moments.

3.  Lenkkraftregelsystem nach Anspruch 2, wobei
    das Begrenzungsmittel des zusätzlichen Moments das zusätzliche Moment beruhend auf einer Eigenschaft begrenzt, die maximal wird, wenn das Fahrzeug aus dem Stillstand anfährt, und die umgekehrt proportional zur Fahrzeuggeschwindigkeit ist.

4.  Lenkkraftregelsystem, das aufweist:

    ein Lenkmittel zur Änderung der Richtungen eines Paars eines linken und rechten Rads als Reaktion auf eine Steuerung des Fahrers eines Fahrzeugs;
    ein Lenkmomentermittlungsmittel zur Ermittlung eines Lenkmoments, wenn das Lenkmittel gesteuert wird;
    ein Lenkunterstützungsmittel zum Addieren einer Lenkunterstützungskraft zur Steuerung des Lenkmittels;
    ein Raddrehzahlermittlungsmittel zur Ermittlung der Raddrehzahlen des Paars des linken und rechten Rads;
    ein Sperrdifferentialgetriebe zum Anwenden eines hemmenden Moments, das eine Differentialbegrenzungskraft zwischen dem Paar des linken und rechten Rads ist, und
    ein Lenkunterstützungsregelmittel zum Regeln der Lenkunterstützungskraft durch das Lenkunterstützungsmittel;
    ein Raddrehzahldifferenz-Änderungsratenberechnungsmittel zum Berechnen einer Raddrehzahldifferenz zwischen dem Paar des linken und rechten Rads und einer Änderungsrate der Raddrehzahldifferenz;
ein Einzelradschlupfermittlungsmittel zur Ermittlung eines Einzelradschlupfes, der an einem des Paars eines linken und rechten Rads auftritt, wenn das Paar des linken und rechten Rads beschleunigt wird, beruhend auf einer Raddrehzahldifferenz und einer Änderungsrate der Raddrehzahldifferenz, die durch das Raddrelizahldifferenz-Änderungsratenberechnungsmittel berechnet werden,
wobei das Lenkunterstützungsregelmittel ein Berechnungsmittel eines zusätzlichen Moments zum Berechnen eines zusätzlichen Moments aufweist, das ausreichend ist, eine Lenkreaktionskraft zu unterbinden, die im Lenkmittel einer Fahrzeugkarosserie ausgeübt wird, die auftritt, wenn der Einzelradschlupf auftritt, durch Proportionalregelung und Integrationsregelung eines Lenkmoments, das durch den Lenkmomentsensor ermittelt wird, und eines Grundunterstützungsmoments, das durch das Lenkunterstützungsregelmittel bestimmt wird, wenn der Einzelradschlupf ermittelt wird; und
das Lenkunterstützungsregelmittel das Lenkunterstützungsmittel so regelt, dass ein zusätzliches Moment, das durch das Berechnungsmittel eines zusätzlichen Moments berechnet wird, bei der Bestimmung der Lenkunterstützungskraft verwendet wird.

5. Lenkkraftregelsystem nach Anspruch 4, das ferner aufweist:

   ein Begrenzungsmittel des zusätzlichen Moments zum Regeln einer Obergrenze eines zusätzlichen Moments, das durch das Berechnungsmittel eines zusätzlichen Moments berechnet wird, beruhend auf dem hemmenden Moment des Sperrdifferentialgetriebes, und zum Begrenzen des zusätzlichen Moments.

6. Lenkkraftregelsystem nach Anspruch 5, wobei
   das Begrenzungsmittel des zusätzlichen Moments das zusätzliche Moment beruhend auf einer Eigenschaft begrenzt, die maximal wird, wenn das Fahrzeug aus dem Stillstand anfährt, und die umgekehrt proportional zur Fahrzeuggeschwindigkeit ist.

7. Lenkkraftregelsystem nach einem der Ansprüche 4 bis 6, das ferner aufweist:

   ein Anfangsschlupffeststellungsmittel zum Feststellen, ob ein durch das Einzelradschlupfermittlungsmittel ermittelter Schlupf ein erster Anfangs schlupf ist oder nicht, der aufgetreten ist, als das Fahrzeug aus dem Stillstand anfuhr oder beschleunigt wurde, wenn das Einzelradschlupfermittlungsmittel den Einzelradschlupf ermittelt, der an einem des Paars eines linken und rechten Rads auftritt; und
   ein Parametereinstellmittel zum Einstellen von Parametern, die eine Integrationsverstärkung und einem Integrationsausgleichsbetrag regeln, entsprechend einer Feststellung durch das Anfangsschlupffeststellungsmittel.

8. Lenkkraftregelsystem nach einem der Ansprüche 4 bis 7, wobei das Anfangsschlupffeststellungsmittel aufweist:

   ein Raddrehzahlzustandsfeststellungsmittel zum Feststellen, ob ein Zustand vorhanden ist oder nicht, in dem sowohl die Raddrehzahldifferenz zwischen dem linken Rad und dem rechten Rad, die durch das Raddrehzahlermittlungsmittel ermittelt wird, als auch die Änderungsrate der Raddrehzahldifferenz zwischen dem linken und rechten Rad zunehmen;
   ein Mittel zum Feststellen eines ersten Schwellenwerts der Raddrehzahldifferenz zum Feststellen, ob ein Ausmaß der Raddrehzahldifferenz zwischen dem linken und rechten Rad einen ersten Schwellenwert überschreitet oder nicht, wenn ein Zustand, in dem sowohl die Raddrehzahldifferenz zwischen dem linken und rechten Rad als auch die Änderungsrate der Raddrehzahldifferenz zunehmen, durch das Raddrehzahlzustandsfeststellungsmittel ermittelt wird;
   ein Fahrpedalbedienungsfeststellungsmittel zum Feststellen, ob ein Fahrpedal betätigt wird oder nicht, beruhend auf einer Öffnung des Fahrpedals, wenn die Öffnung des Fahrpedals einen zweiten Schwellenwert überschreitet, falls das Mittel zum Feststellen eines ersten Schwellenwerts der Raddrehzahldifferenz feststellt, dass das Ausmaß der Raddrehzahldifferenz zwischen dem linken und rechten Rad den ersten Schwellenwert überschreitet; und
   ein Schlupffeststellungsmittel zum Feststellen eines Auftretens eines Einzelschlupfes, der an einem des linken und rechten Rads auftritt, wenn das Paar des linken und rechten Rads beschleunigt werden, wenn das Fahrpedalbedienungsfeststellungsmittel feststellt, dass das Fahrpedal bedient wird.

9. Lenkkraftregelsystem nach Anspruch 1 oder 4, wobei das Lenkunterstützungsregelmittel das Lenkunterstützungsmittel so regelt, dass es das zusätzliche Moment anwendet, so dass das durch das Lenkmomentermittlungsmittel ermittelte Lenkmoment null wird.

**10.** Lenkkraftregelsystem nach einem der Ansprüche 1 bis 6, wobei das Lenkunterstützungsregelmittel das Lenkunterstützungsmittel regelt, wenn die hemmende Kraft das Sperrdifferentialgetriebes erhöht wird, so dass das linke und rechte Rad direkt miteinander verbunden werden.

**11.** Lenkkraftregelsystem nach einem der Ansprüche 1 bis 6, wobei
das zusätzliche Moment so berechnet wird, dass es die folgenden Gleichungen verfüllt:

$$Ta0 = Ts + Te;$$

$$Ta1 = (Kp)(Ta0) + (Ki) \int (Ta0 + Tw)dt,$$

wobei Ta0 die Lenkreaktionskraft ist,
Ts das durch das Lenkmomentermittlungsmittel ermittelte Lenkmoment ist,
Te das Grundunterstützungsmoment ist,
Tal das zusätzliche Moment ist,
Kp eine Vergleichsverstärkung ist,
Ki eine Integrationsverstärkung ist, und
Tw ein Integrationsausgleichsbetrag ist.

## Revendications

**1.** Système de commande de force de direction, comprenant :

un moyen de direction destiné à changer la direction d'une paire de roues, gauche et droite, en réaction à une commande d'un conducteur d'un véhicule ;
un moyen de détection d'un couple de direction destiné à détecter un couple de direction quand le moyen de direction est commandé ;
un moyen d'assistance de direction destiné à ajouter une force d'assistance de direction à la commande du moyen de direction ;
un moyen de détection de vitesse de roue destiné à détecter les vitesses de roues de la paire de roues, gauche et droite ;
un engrenage différentiel à glissement limité destiné à appliquer un couple d'inhibition qui est une force de limitation de différentiel entre les roues de la paire, gauche et droite, et
un moyen de commande d'assistance de direction destiné à commander la force d'assistance de direction par le moyen d'assistance de direction ;
où le moyen de commande d'assistance de direction comprend un moyen de calcul de couple additionnel destiné à calculer un couple additionnel suffisant pour annuler une force de retour de direction appliquée sur le moyen de direction d'une caisse de véhicule, formée quand l'engrenage différentiel à glissement limité est actionné, par commande proportionnelle et commande d'intégration d'un couple de direction $T_s$ détecté par le capteur de couple de direction et d'un couple d'assistance de base $T_e$ déterminé par le moyen de commande d'assistance de direction, et où
le moyen de commande d'assistance de direction commande le moyen d'assistance de direction de manière à recourir à un couple additionnel calculé par le moyen de calcul de couple additionnel pour déterminer la force d'assistance de direction.

**2.** Système de commande de force de direction selon la revendication 1, comprenant en outre :

un moyen de limitation de couple additionnel destiné à régler une limite supérieure d'un couple additionnel calculé par le moyen de calcul de couple additionnel, sur la base d'un couple d'inhibition de l'engrenage différentiel à glissement limité, et à limiter le couple additionnel.

**3.** Système de commande de force de direction selon la revendication 2, où le moyen de limitation de couple additionnel limite le couple additionnel sur la base d'une caractéristique dont le maximum est atteint quand le véhicule démarre depuis un état d'arrêt et qui est inversement proportionnelle à la vitesse du véhicule.

**4.** Système de commande de force de direction, comprenant :

un moyen de direction destiné à changer la direction d'une paire de roues, gauche et droite, en réaction à une commande du conducteur d'un véhicule ;

un moyen de détection d'un couple de direction destiné à détecter un couple de direction quand le moyen de direction est commandé ;

un moyen d'assistance de direction destiné à ajouter une force d'assistance de direction à la commande du moyen de direction ;

un moyen de détection de vitesse de roue destiné à détecter les vitesses de roues de la paire de roues, gauche et droite ;

un engrenage différentiel à glissement limité destiné à appliquer un couple d'inhibition qui est une force de limitation de différentiel entre les roues de la paire, gauche et droite, et

un moyen de commande d'assistance de direction destiné à commander la force d'assistance de direction par le moyen d'assistance de direction ;

un moyen de calcul de fréquence de variation du différentiel de vitesses de roue destiné à calculer un différentiel de vitesses de roue entre les roues de la paire, gauche et droite, et une fréquence de variation du différentiel de vitesses de roue ;

un moyen de détection de patinage d'une roue destiné à détecter le patinage d'une roue survenant sur l'une des roues de la paire, gauche et droite, quand les roues de la paire, gauche et droite, sont accélérées sur la base d'un différentiel de vitesses de roue et d'une fréquence de variation du différentiel de vitesses de roue calculés par le moyen de calcul de fréquence de variation du différentiel de vitesses de roue,

où le moyen de commande d'assistance de direction comprend un moyen de calcul de couple additionnel destiné à calculer un couple additionnel suffisant pour annuler une force de retour de direction appliquée sur le moyen de direction d'une caisse de véhicule, formée quand survient le patinage d'une roue, par commande proportionnelle et commande d'intégration d'un couple de direction détecté par le capteur de couple de direction et d'un couple d'assistance de base déterminé par le moyen de commande d'assistance de direction, quand le patinage d'une roue est détecté, et où le moyen de commande d'assistance de direction commande le moyen d'assistance de direction de manière à recourir à un couple additionnel calculé par le moyen de calcul de couple additionnel pour déterminer la force d'assistance de direction.

**5.** Système de commande de force de direction selon la revendication 4, comprenant en outre :

un moyen de limitation de couple additionnel destiné à régler une limite supérieure d'un couple additionnel calculé par le moyen de calcul de couple additionnel, sur la base du couple d'inhibition de l'engrenage différentiel à glissement limité, et destiné à limiter le couple additionnel.

**6.** Système de commande de force de direction selon la revendication 5, où le moyen de limitation de couple additionnel limite le couple additionnel sur la base d'une caractéristique dont le maximum est atteint quand le véhicule démarre depuis un état d'arrêt et qui est inversement proportionnelle à la vitesse du véhicule.

**7.** Système de commande de force de direction selon l'une des revendications 4 à 6, comprenant en outre :

un moyen de détermination de patinage initial destiné à déterminer si un patinage détecté par le moyen de détection de patinage d'une roue est ou n'est pas un premier patinage initial survenant quand le véhicule démarre depuis un état d'arrêt ou est accéléré, quand le moyen de détection de patinage d'une roue détecte le patinage d'une roue survenant sur l'une des roues de la paire, gauche et droite ; et

un moyen de réglage de paramètres destiné à régler des paramètres régulant un gain d'intégration et une valeur de compensation d'intégration en fonction d'une détermination par le moyen de détermination de patinage initial.

**8.** Système de commande de force de direction selon l'une des revendications 4 à 7, où le moyen de détermination de patinage initial comprend :

un moyen de détermination d'état de vitesse de roue destiné à déterminer si un état est ou n'est pas présenté, où le différentiel de vitesses de roue entre la roue gauche et la roue droite détecté par le moyen de détection de vitesse de roue et la fréquence de variation du différentiel de vitesses de roue entre la roue gauche et la roue droite sont en augmentation ;

un moyen de détermination d'un premier seuil de différentiel de vitesses de roue destiné à déterminer si une amplitude du différentiel de vitesses de roue entre la roue gauche et la roue droite dépasse ou non un premier seuil, quand un état où le différentiel de vitesses de roue entre la roue gauche et la roue droite ainsi que la fréquence de variation du différentiel de vitesses de roue sont en augmentation est détecté par le moyen de détermination d'état de vitesse de roue ;

un moyen de détermination d'actionnement d'accélérateur destiné à déterminer si un accélérateur est ou n'est pas actionné, sur la base d'une ouverture de l'accélérateur quand l'ouverture de l'accélérateur dépasse un deuxième seuil, si le moyen de détermination d'un premier seuil de différentiel de vitesses de roue détermine que l'amplitude du différentiel de vitesses de roue entre la roue gauche et la roue droite dépasse le premier seuil ; et

un moyen de détermination de patinage destiné à déterminer la survenue d'un patinage d'une roue, survenant sur la roue gauche ou la roue droite quand les roues de la paire, gauche et droite, sont accélérées, si le moyen de détermination d'actionnement d'accélérateur détermine que l'accélérateur est actionné.

9. Système de commande de force de direction selon la revendication 1 ou la revendication 4, où le moyen de commande d'assistance de direction commande le moyen d'assistance de direction de manière à appliquer le couple additionnel, de sorte que le couple de direction détecté par le moyen de détection d'un couple de direction soit annulé.

10. Système de commande de force de direction selon l'une des revendications 1 à 6, où le moyen de commande d'assistance de direction commande le moyen d'assistance de direction quand la force d'inhibition de l'engrenage différentiel à glissement limité est augmentée, de manière à relier directement la roue gauche et la roue droite l'une à l'autre.

11. Système de commande de force de direction selon l'une des revendications 1 à 6, où le couple additionnel est calculé de manière à satisfaire les égalités suivantes :

$$Ta0 = Ts + Te \; ;$$

$$Ta1 = (Kp)(Ta0) + (Ki) \int (Ta0 + Tw)dt,$$

où Ta0 est la force de retour de direction,

Ts est le couple de direction détecté par le moyen de détection d'un couple de direction,

Te est le couple d'assistance de base,

Ta1 est le couple additionnel,

Kp est un gain de comparaison,

Ki est un gain d'intégration, et

Tw est une valeur de compensation d'intégration.

## FIG. 1

# FIG. 2

START

READ IN STEERING TORQUE SENSOR VALUE Ts, BASIC ASSISTING TORQUE Te, VEHICLE SPEED Vb AND LSD INHIBITING FORCE TL ⟶ S101

$Ta0 = Ts + Te$ ⟶ S102

$Ta1 = Kp \times Ta0 + Ki \times \int (Ta0 + Tw) dt$ ⟶ S103

Kp: PROPORTIONAL GAIN
Ki: INTEGRATION GAIN

MAXIMUM STEERING FORCE VARIATION Tlim BY LSD INHIBITING TORQUE TL $= KL \times TL$ ⟶ S104

KL: CONVERSION FACTOR

$Ta2 = MIN(Tlim, |Ta1|) \times sgn(Ta1)$ ⟶ S105

PERFORM OPERATION TO CALCULATE VEHICLE SPEED GAIN Gv ⟶ S106

EPS ADDITIONAL TORQUE $Ta3 = Gv \times Ta2$ ⟶ S107

EXECUTE EPS CONTROL FOR REALIZATION OF Ta3 RETURN. ⟶ S108

END

22

# FIG. 3

# FIG. 4A

START

S1

CALCULATE LEFT AND RIGHT
FRONT WHEEL SPEED DIFFERENCE,
CHANGE RATE OF LEFT AND RIGHT
FRONT WHEEL SPEED DIFFERENCE

S2

CONTROL FLAG
FW=1?  →NO

YES

S3

ARE BOTH LEFT AND
RIGHT FRONT WHEELS ACCELER-
ATED?  →NO

S21

|CHANGE
RATE OF LEFT
AND RIGHT FRONT
WHEEL SPEED
DIFFERENCE|>
β1?  →NO

YES

S4

|CHANGE RATE OF
LEFT AND RIGHT FRONT WHEEL
SPEED DIFFERENCE|>α?  →NO

YES

S22

ACCELERATOR
OPENING>η1 ?  →NO

YES

S5

ARE SIGNS
OF LEFT AND RIGHT
FRONT WHEEL SPEED DIFFER-
ENCE AND CHANGE RATE OF LEFT AND
RIGHT FRONT WHEEL SPEED
DIFFERENCE THE
SAME?  →NO

S23

TIMER≦ μ?  →NO

YES

YES

S6

|CHANGE RATE OF
LEFT AND RIGHT FRONT WHEEL
SPEED DIFFERENCE|>β?  →NO

YES

S7

ACCELERATOR OPENING>η?  →NO

YES

C

D

E

F

# FIG. 4B

## FIG. 5

S31

(A)

S32

S31 — ACCELERATOR OPENING=0? — NO — HAS Fw CHANGED FROM "0" TO "1" ? — NO

YES

S35 — $n \leftarrow 0$

S33 — $n \leftarrow n+1$

S34 — $n \leftarrow n$

YES

S36

NO

S36 — $n \neq 1?$ — NO

YES

S39 — $Ki \leftarrow Ki2$

S37 — $Ki \leftarrow Ki1$

YES

S38 — $Tw \leftarrow 0$

S41 — $Tw \leftarrow Tw1$

(B)

# FIG. 6

B

READ IN STEERING TORQUE SENSOR VALUE Ts, BASIC ASSISTING TORQUE Te, VEHICLE SPEED Vb AND LSD INHIBITING FORCE TL — S51

$Ta0=Ts+Te$ — S52

$Ta1=Kp \times Ta0+Ki \times \int (Ta0+Tw)dt$ — S53

Kp : PROPORTIONAL GAIN
Ki : INTEGRATION GAIN

MAXIMUM STEERING FORCE VARIATION Tlim BY LSD INHIBITING TORQUE TL $= KL \times TL$ — S54

KL : CONVERSION FACTOR

$Ta2=MIN(Tlim, |Ta1|) \times sgn(Ta1)$ — S55

PERFORM OPERATION TO CALCULATE VEHICLE SPEED GAIN Gv — S56

EPS ADDITIONAL TORQUE $Ta3=Gv \times Ta2$ — S57

EXECUTE EPS CONTROL FOR REALIZATION OF Ta3 RETURN. — S58

END

# FIG. 7

# FIG. 8

ADDITIONAL TORQUE

P   SPINNING WHEEL

DRIVING FORCE BY LEFT FRONT WHEEL

DRIVING FORCE BY RIGHT FRONT WHEEL

HIGH $\mu$   LOW $\mu$

START-UP ON SPLIT GRIP M ROAD SURFACE.

**EP 2 412 608 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8099642 A